# EUROPEAN PATENT SPECIFICATION

(11) **EP 3 318 859 B1**
(45) Date of publication and mention of the grant of the patent: **06.05.2020**
(21) Application number: 17200672.8
(22) Date of filing: 08.11.2017
(51) Int. Cl.: G01K 13/02

(54) **COOLED COOLING AIR SAFETY THROUGH A TEMPERATURE-MONITORING LINE REPLACEABLE UNIT**
SICHERHEIT VON GEKÜHLTER KÜHLLUFT DURCH EINE TEMPERATURÜBERWACHUNGSLEITUNGAUSWECHSELEINHEIT
SÉCURITÉ D'AIR DE REFROIDISSEMENT REFROIDI PAR L'INTERMÉDIAIRE D'UNE UNITÉ INTERCHANGEABLE DE LIGNE DE SURVEILLANCE DE TEMPÉRATURE

(30) Priority: 08.11.2016 US 201615346187
(43) Date of publication of application: 09.05.2018
(73) Proprietor: United Technologies Corporation, Farmington, CT 06032 (US)
(72) Inventor: SCHWARZ, Frederick M., Glastonbury, CT Connecticut 06033 (US); SNAPE, Nathan, Tolland, CT Connecticut 06084 (US)
(74) Representative: Dehns

(56) References cited:
- EP-A1- 3 045 681
- EP-A2- 2 818 839
- US-A- 5 106 203
- US-A1- 2012 236 899
- US-A1- 2015 000 303

## Description

### BACKGROUND

This present disclosure relates to a gas turbine engine, and more particularly to improvements in providing safety for a gas turbine engine through a temperature-monitoring line replaceable unit of a cooled cooling air system.

Gas turbine engines are known and typically include a fan delivering air into a bypass duct as propulsion air. Further, the fan delivers air into a compressor section where it is compressed. The compressed air passes into a combustion section where it is mixed with fuel and ignited. Products of this combustion pass downstream over turbine rotors driving them to rotate.

It is known to provide cooling air from the compressor to the turbine section to lower the operating temperatures in the turbine section and improve overall engine operation. Typically, air from the high compressor discharge has been tapped, passed through a heat exchanger, which may sit in the bypass duct and then delivered into the turbine section. The air from the downstream most end of the compressor section is at elevated temperatures. However, if the cooling air is interrupted, these operating temperatures could be un-safe. For example, if a heat exchanger or other cooled cooling air plumbing element upstream/downstream of the heat exchanger were to crack and release the cooling air external to the gas turbine engine (rather than delivering the cooling air to the gas turbine engine), the key engine components could fail.

US 2015/000303 A1, US 5106203A, US 2010/236899 A1 and EP 2818839A disclose the use of thermocouples in gas turbine engines.

### BRIEF DESCRIPTION

Viewed from one aspect the present invention provides an aircraft according to claim 1.

In accordance with one or more embodiments, a temperature detection device located downstream a cooling network coupled to a gas turbine engine and located upstream of at least one of a compressor rotor of a compressor section of the gas turbine engine and a turbine rotor of a turbine section of the gas turbine engine, is provided. The temperature detection device includes at least one thermocouple configured to detect an operational temperature of the cooling network. The temperature detection device communicates the operational temperature to a control system.

In accordance with another embodiment or the temperature detection device embodiment above, the temperature detection device can be located in a mixing chamber of the gas turbine engine.

In accordance with another embodiment or any of the temperature detection device embodiments above, the temperature detection device can be located within an engine casing substantially at a re-entry point of cooled-cooling air into the engine casing.

In accordance with another embodiment or any of the temperature detection device embodiments above, the temperature detection device can be located internally to the gas turbine engine.

In accordance with another embodiment or any of the temperature detection device embodiments above, the temperature detection device can be mounted on a probe connecting into an engine casing of the gas turbine engine.

In accordance with another embodiment or any of the temperature detection device embodiments above, the at least one thermocouple can be a plurality of thermocouples.

In accordance with another embodiment or any of the temperature detection device embodiments above, the plurality of thermocouples can comprise a first thermocouple configured to detect a first reading of the operational temperature and a second thermocouple configured to detect a second reading of the operational temperature for redundancy, and wherein the temperature detection device can be configured to communicate the first reading via a first channel to the control system and communicate the second reading via a second channel of the control system.

In accordance with another embodiment or any of the temperature detection device embodiments above, a line replaceable unit can comprise the temperature detection device and the at least one thermocouple.

In accordance with another embodiment or any of the temperature detection device embodiments above, the control system can comprise an electronic engine controller system, and the temperature detection device can communicate the operational temperature as an electrical signal to the electronic engine controller.

In accordance with another embodiment or any of the temperature detection device embodiments above, the communication of the operational temperature to the control system can cause the control system to compare to the operational temperature to an engine reference parameter.

In accordance with another embodiment or any of the temperature detection device embodiments above, the control system can be configured to set a maintenance flag, a power reduction, or an in-flight shutdown flag based on the comparison of the operational temperature to the engine reference parameter.

In accordance with one or more embodiments, a gas turbine engine is provided. The gas turbine engine comprising a compressor section; a combustor section; a turbine section; and a temperature detection device. The temperature detection device is downstream a cooling network coupled to a gas turbine engine and located upstream of at least one of a compressor rotor of a compressor section of the gas turbine engine and a turbine rotor of a turbine section of the gas turbine engine. The temperature detection device comprises at least one thermocouple configured to detect operational temperature of the gas turbine engine. The temperature detection device is configured to communicate the operational temperature to a control system.

In accordance with another embodiment or the gas turbine engine embodiment above, the temperature detection device can be a line replaceable unit.

In accordance with another embodiment or any of the gas turbine engine embodiments above, the at least one thermocouple can be a plurality of thermocouples, wherein the plurality of thermocouples can comprise a first thermocouple configured to detect a first reading of the operational temperature and a second thermocouple configured to detect a second reading of the operational temperature, and wherein the temperature detection device can be configured to communicate the first reading via a first channel to the control system and communicate the second reading via a second channel of the control system.

In accordance with another embodiment or any of the gas turbine engine embodiments above, the temperature detection device can be located in a mixing chamber of the gas turbine engine.

In accordance with another embodiment or any of the gas turbine engine embodiments above, the temperature detection device can be located within an engine casing substantially at a re-entry point of cooled-cooling air into the engine casing.

Viewed from another aspect the present invention provides a method of detecting a delivery temperature of cooled air within an aircraft according to claim 13.

In accordance with one or more embodiments, a method of detecting an operational temperature of a gas turbine engine coupled to a cooling network is provided. The method comprising detecting, by a first thermocouple of a temperature detection device, a first reading of the operational temperature at a first location. The first location is downstream a cooling network coupled to a gas turbine engine and located upstream of at least one of a compressor rotor of a compressor section of the gas turbine engine and a turbine rotor of a turbine section of the gas turbine engine. The method comprising detecting, by a second thermocouple of the temperature detection device, a second reading of the operational temperature at the first location. The method comprising communicating, by the temperature detection device, the first reading via a first channel to a control system and the second reading via a second channel to the control system. The communication of the first and second readings of the operational temperatures to the control system causes the control system to compare to the operational temperatures to an engine reference parameter.

In accordance with another embodiment or the method embodiment above, the temperature detection device can be a line replaceable unit.

In accordance with another embodiment or any of the method embodiments above, the temperature detection device can be located in a mixing chamber of the gas turbine engine.

In accordance with another embodiment or any of the method embodiments above, the temperature detection device is located within an engine casing substantially at a re-entry point of cooled-cooling air into the engine casing.

### BRIEF DESCRIPTION OF THE DRAWINGS

The following descriptions should not be considered limiting in any way. With reference to the accompanying drawings, like elements are numbered alike:
FIG. 1 schematically shows an embodiment of a gas turbine engine;
FIG. 2 is an operational temperature detection system in accordance with an embodiment;
FIG. 3 is an operational temperature detection system in accordance with another embodiment; and
FIG. 4 is an operational temperature detection system in accordance with another embodiment.

### DETAILED DESCRIPTION

A detailed description of one or more embodiments of the disclosed apparatus and method are presented herein by way of exemplification and not limitation with reference to the Figures.

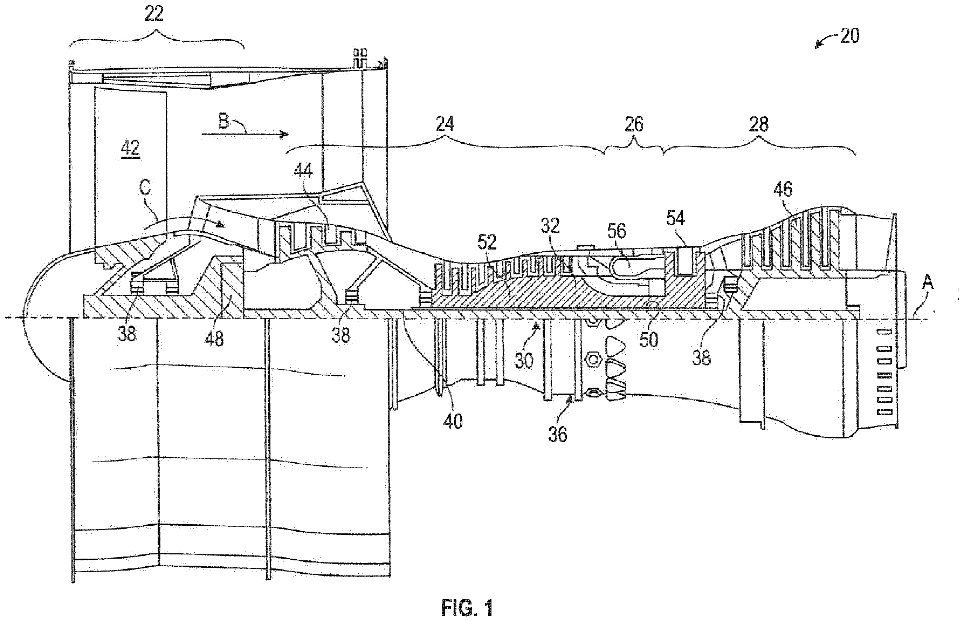

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8Mach and about 35,000 feet (10,688 meters). The flight condition of 0.8 Mach and 35,000 ft (10,688 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]0.5. The "Low corrected fan tip speed" as disclosed herein according to one non-limiting embodiment is less than about 1150 ft/second (350.5 m/sec).

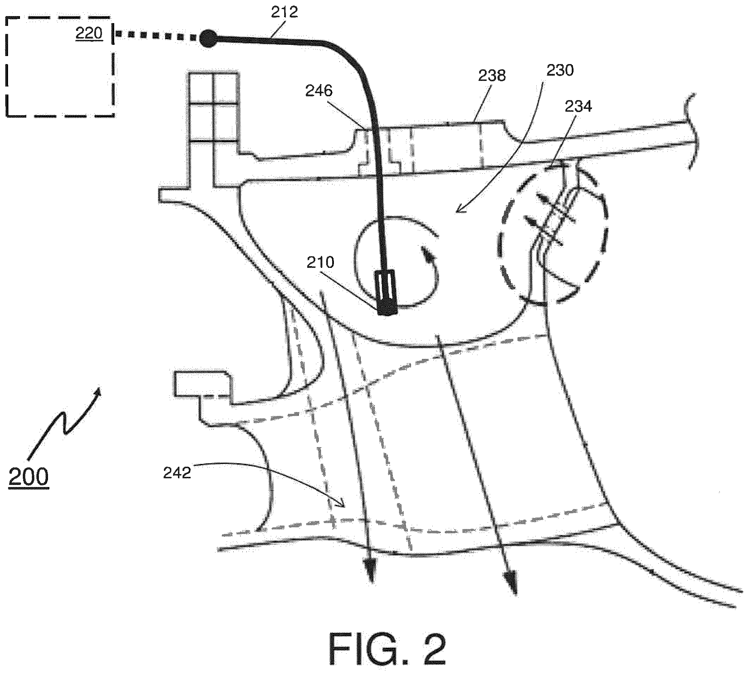

Turning now to FIG. 2, an operational temperature detection system 200 is provided in accordance with an embodiment. In a non-limiting embodiment, the operational temperature detection system 200 comprises at least one temperature detection device 210, at least one wire 212, and a control system 220.

The temperature detection device 210 can be a probe or temperature probe comprising at least one thermocouple configured to detect an operational temperature of a gas turbine engine (e.g., the temperature probe measures a delivery temperature of cooled cooling air), such as the gas turbine engine 20 of FIG. 1. A thermocouple is a thermoelectric device that comprises two wires of different metals producing a temperature-dependent voltage. The at least one thermocouple can be a plurality of thermocouples. The plurality of thermocouples can comprise a first thermocouple configured to detect a first reading of the operational temperature and a second thermocouple configured to detect a second reading of the operational temperature. The second reading can be substantially the same operational temperature as the first reading for redundancy. The temperature detection device 210 can communicate the operational temperature readings detected by the plurality of thermocouples to the control system 220 via the wire 212. For example, the temperature detection device 210 is configured to communicate the first reading via a first channel to the control system 220 and communicate the second reading via a second channel of the control system 220, where each channel can perform independent processing of the operational temperature readings. Note that, in a non-limiting embodiment, the first reading and the second reading can represent a single temporal instance, taken at any time during operation of a gas turbine engine. Further, the independent processing of the operational temperature readings by the control system 220 can occur contemporaneously with the single temporal instance. In another non-limiting embodiment, the temperature detection device 210 can constantly communicate the first and second readings, while the independent processing of the operational temperature readings by the control system 220 can occur constantly or at predetermined time intervals (e.g., every 10 minutes).

The wire 212 is representative of any communication mechanism, whether wired or wireless, that can carry (electrical) signals between the temperature detection device 210 and the control system 220. The control system 220 is representative of any mechanism that can monitor the temperature detection device 210. An example of the control system 220 includes a full authority digital engine (or electronics) control (FADEC) comprising a digital computer (e.g., an electronic engine controller or engine control unit) and related accessories (e.g., a memory storing computer executable code) that control aspects of gas turbine engine performance. The control system 220 can comprise one or more channels for communicating with the temperature detection device 210. For example, the control system 220 can comprise an A Channel (e.g., the first channel) for communicating with the first thermocouple and a B Channel (e.g., the second channel) for communicating with the second thermocouple.

The temperature detection device 210 can be located upstream of a turbine blade of a turbine section of the gas turbine engine (and in some embodiments can be located upstream of a compressor rotor of the compressor section 24 or a turbine rotor of the turbine section 28). The temperature detection device 210 can located within a cooling network coupled to a gas turbine engine or, in some embodiments, can be located downstream of the cooling network coupled to the gas turbine engine. In a non-limiting embodiment, the temperature detection device 210 is located at least at one of a location downstream of all associated cooling network source and sink plumbing or plumbing elements, a location upstream of a (last) compressor rotor of a compressor section of the gas turbine engine, and a location upstream of a (first) turbine rotor of a turbine section of the gas turbine engine. The gas turbine engine can be any commercial or military gas turbine engine. Note that a non-limiting gas turbine engine 20 is described and illustrated in FIG. 1.

The cooling network can be any cooled-cooling air system for providing cooling air from a compressor section to a turbine section to reduce operating temperatures in and improve operations of the gas turbine engine, such as from the compressor section 24 to the turbine section 28 of FIG. 1. Examples of cooled-cooling air systems include heat-exchanger-based and intercooling-based cooled cooling air systems.

In a non-limiting embodiment, FIG. 2 illustrates a cross section of the gas turbine engine at a location downstream of the cooling network and upstream of the turbine blade of the turbine section of the gas turbine engine. Illustrated within the cross section are a mixing chamber 230, a first medium supply 234, a second medium supply 238, a medium outlet 242, and a slot 246.

The mixing chamber 230 can be any space or connection within the gas turbine engine where multiple medium and/or multiple medium flows are combined. With respect to the cooling network described herein, the mixing chamber 230 can be a mixing point between a first air flow (e.g., cooling air) from the cooling network and a second air flow (e.g., compressor bleed air) from a compressor of the gas turbine engine. The first medium supply 234 marks an entry point to the mixing chamber 230 for the cooling air. The second medium supply 238 marks an entry point to the mixing chamber 230 for the compressor bleed air. The medium outlet 242 marks an exit point from the mixing chamber 230 for a combination of the cooling air and the compressor bleed air.

The temperature detection device 210 can be located in the mixing chamber 230 of the gas turbine engine according to an embodiment. As shown in FIG. 2, the slot 246 can provide access to the mixing chamber 230 for temperature detection device 210 through a chamber wall (e.g., the slot 246 can introduce the temperature detection device 210 at a strut in an engine casing to read a mix temperature). The access provided by the slot 246 can enable replacing and/or removing of the temperature detection device 210 (thereby allowing the temperature detection device 210 to be a line replaceable unit, as described herein).

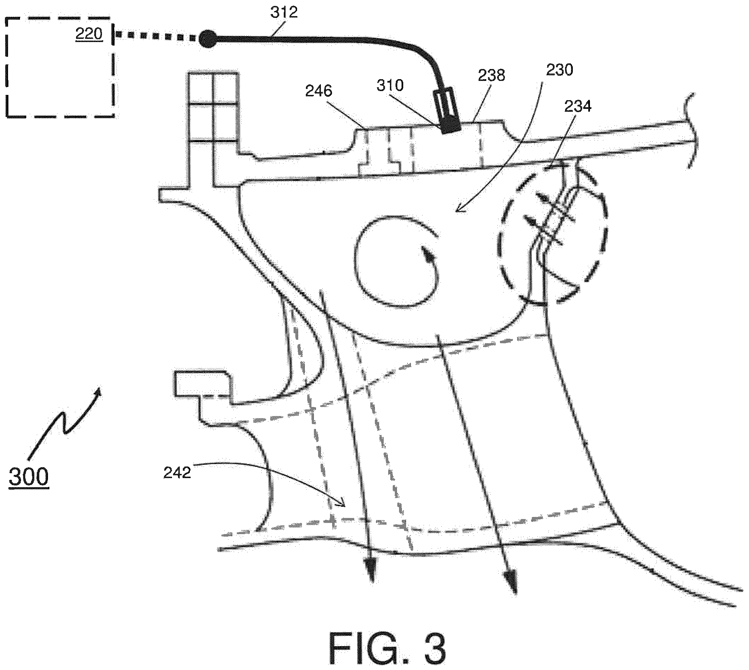

In other embodiments, the temperature detection device can be located in a plumbing element of the gas turbine engine, located internally to the gas turbine engine, located at an entry of an engine casing of the gas turbine engine (such as at a location substantially at a re-entry point of cooled-cooling air into the engine casing), mounted on a probe connecting into an engine casing of the gas turbine engine, located at an entry of a diffuser case of the gas turbine engine, mounted on a probe connecting into a diffuser case of the gas turbine engine, or located at an end of the cooling network (as shown in FIG. 3). Further, in an embodiment, a plurality of the temperature detection devices 210 can be utilized in any combination of multiple locations.

Turning now to FIG. 3, an operational temperature detection system 300 is provided in accordance with an embodiment. Components of the in operational temperature detection system 200 of FIG. 2 that are similar to the operational temperature detection system 300 have been reused for ease of explanation, by using the same identifiers, and are not re-introduced. In a non-limiting embodiment, the operational temperature detection system 300 comprises a temperature detection device 310 located at an end of an exit portion of the cooling network. As shown, the end of the exit portion of the cooling network is contemporaneous with the first medium supply 234 (e.g., near where the cooled cooling air is re-introduced into the engine to monitor all external plumbing).

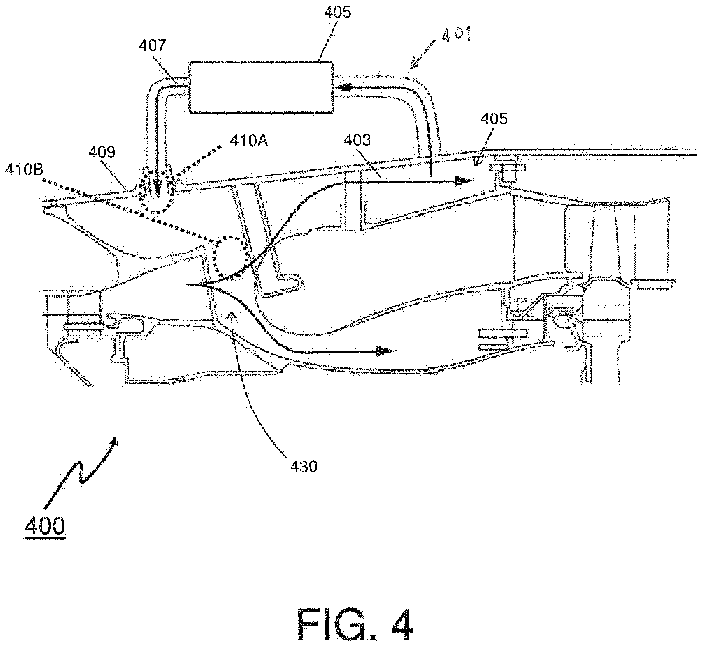

Turning now to FIG. 4, an operational temperature detection system 400 is provided in accordance with an embodiment. In a non-limiting embodiment, the operational temperature detection system 400 illustrates a cooling circuit 401 that takes flow 403 out of a plenum 405 of a diffuser and reintroduces it as a second flow 407 back into the engine casing 409. Note that a temperature detection device as described herein can be located at one or more locations within the operational temperature detection system 400, such as within or downstream of the cooling network. As shown in FIG. 4, the temperature detection device can be located at an end of an exit portion 410A of the cooling circuit 401 (e.g., near where the cooled cooling air is re-introduced into the engine to monitor all external plumbing). The temperature detection device can also be located at in the mixing chamber 430 (e.g., at a location 410B).

With respect to any embodiment of the temperature detection device 210, the temperature detection device 210 can be configured as a line replaceable unit. A line-replaceable unit (a.k.a. a lower line-replaceable unit, a line-replaceable component, or line-replaceable item) is a modular component configured to be replaced quickly at an operating location. In the case of an aircraft, a line-replaceable temperature detection device 210 can be replaced on a flight line (rather than at a repair shop). For example, unit or probe or assembly of the temperature detection device 210 can be removed without splitting any flanges of the gas turbine engine, thereby allowing the replacement of the unit or the probe or the assembly of the temperature detection device 210 on the flight line without taking an aircraft to the repair shop.

In view of the above, an operational example of an operational temperature detection system and a temperature detection device is now described. The operational example begins during a gas turbine engine operating at extraordinarily high compressor discharge temperatures with a (heat-exchanger-based or intercooling-based) cooled cooling air system in use. During this time, cooling air from the cooled cooling air system is being mixed in the mixing chamber with compressor bleed air, the result of which is being supplied to a turbine section of a gas turbine engine. The temperature detection device, which may be in any location described herein, detects/reads operational temperatures of the gas turbine engine at its location. For example, a first thermocouple of the temperature detection device detects a first set of the operational temperatures at a location of the temperature detection device (e.g., a plurality of first readings), and a second thermocouple of the temperature detection device detects a second set of the operational temperatures at the location of the temperature detection device (e.g., a plurality of second readings). The location of the temperature detection device can be downstream of the cooling network coupled and upstream of a turbine blade of the turbine section of the gas turbine engine. As shown in FIGS. 2 and 3, this location can be within the mixing chamber or at the end of the exit portion of the cooling network.

In response to the operational temperatures being detected/read, the temperature detection device communicates the operational temperatures to the control system. This communication can occur across multiple channels. For instance, the temperature detection device can communicate the first set of the operational temperatures via the first channel (A Channel) to the control system and can communicate the second set of the operational temperatures via the second channel (B Channel) to the control system. By commutating the first and second sets of the operational temperatures to the control system, the temperature detection device can cause the control system to store and/or process the operational temperatures.

In a non-limiting embodiment, the control system can utilize computer executable code stored on a memory to process the operational temperatures to detect one or more operational issues. The computer executable code is software logic for determining engine reference parameters and comparing the engine reference parameters with the operational temperatures.

An engine reference parameter can be a predetermined value based on an engine power setting and an ambient temperature. The predetermined value can be pre-calculated and stored base on factory measurements and calculations. A plurality of the predetermined values can be accumulated and stored by the control system in the memory. In this way, the control system already has a working knowledge of gas turbine engine operational condition. For example, the control system based on a predetermined takeoff power on an 86 degree Fahrenheit day will have a pre-calculated and pre-stored engine reference parameter. Note that each set of pre-calculated and pre-stored engine reference parameters match a particular location of the temperature detection device, such that a different set of engine reference parameters are utilized for different locations of the temperature detection device.

Thus, to begin the processing of the operational temperatures, the control system identifies and selected engine reference parameters that match the location of the temperature detection device and are associated with the detected engine power setting and ambient temperature. Next, the control system receives the operational temperatures. Upon receipt of the operational temperatures, the control system compares to the operational temperatures to the selected engine reference parameters.

In a non-limiting embodiment, the control system can compare the operational temperatures to the selected engine reference parameters according to LOGIC #1, which is an example of the computer executable code.

```
       LOGIC #1:
       Set Engine Reference Parameter = X;
       If (A and B are equal to X) then (Condition 1);
       If ((A is equal to X and B is not equal to X) or (A is not equal to X and B is
       equal to X)) then (Condition 2);
      If (A and B are not equal to X) then (Condition 3).
```

Condition 1 of the LOGIC #1 comprises when both A Channel and B Channel are providing an expected temperature (e.g., A and B are equal to X), which indicates that the gas turbine engine and the cooling network are operating correctly.

Condition 2 of the LOGIC #1 comprises when one A Channel or B Channel is providing an expected temperature (e.g., A or B is equal to X) and the remaining is not, which indicates that the temperature detection device is faulty.

Condition 2 of the LOGIC #1 comprises when one A Channel or B Channel is providing an expected temperature (e.g., A or B is equal to X) and the remaining is not, which indicates that the temperature detection device is faulty or that an operational issues has been detected.

In the case of Condition 2 or Condition 3, the control system can set a maintenance flag to indicate that the temperature detection device should be serviced (e.g., troubleshoot by removing and replacing). Further, in the case of Condition 3, the control system can also set a power reduction and/or an in-flight shutdown flag to indicate that the gas turbine engine and/or the cooling network need servicing. Not that while 'equal' and 'not equal' are utilized in the above example, the LOGIC #1 can be modified to detect and compare operational temperatures within a margin (e.g., If (A and B are within ±10% of X) then (Condition 1)). In this way, since operation temperatures can vary a great deal with power setting, altitude, and ambient temperature, a health of the cooling network can be measured and referenced to normalizing parameters.

In addition, the engine reference parameter can be tailored, over time, by the control system based on a history of parameters. That is, because the control system can be aware of the engine power setting based on rotor speed of the gas turbine engine (detected or communicated from other sensors or systems) and be aware of the ambient temperature (detected or communicated from other sensors or systems), the control system can acquire a history of parameters for a particular gas turbine engine based on engine and environmental conditions. Thus, factory determined engine reference parameters can be dynamically synthesized over time based detected operational temperatures by the temperature detection device.

Technical effects and benefits of an operational temperature detection system include providing a safety mechanism that automatically detects and notifies of operational temperature issues during commercial and military use of heat-exchanger-based and intercooling-based cooled cooling air systems and gas turbine engine operating at extraordinarily high compressor discharge temperatures (even beyond levels that are possible with current and future materials). Technical effects and benefits of the operational temperature detection system also include enabling turbine durability improvements by monitoring temperatures to reduce temperature effects on certain critical parts.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. An aircraft comprising:
a gas turbine engine (20) comprising a compressor section (24) and a turbine section (28);
a cooling network coupled to the gas turbine engine (20); and
an operational temperature detection system (200) comprising a control system (220) and a temperature detection device (210;310) located downstream of the cooling network and located upstream of at least one of a compressor rotor of the compressor section (24) of the gas turbine engine and a turbine rotor of the turbine section (28) of the gas turbine engine;
wherein the temperature detection device (210;310) comprises at least one thermocouple configured to detect a delivery temperature of cooled cooling air of the cooling network coupled to the gas turbine engine; and
wherein the temperature detection device is configured to communicate the delivery temperature to the control system (220).

2. The aircraft of claim 1, wherein the temperature detection device (210) is located in a mixing chamber (230;430) of the gas turbine engine, or wherein the temperature detection device (310) is located within an engine casing (409) substantially at a re-entry point (410A) of cooled-cooling air into the engine casing (409).

3. The aircraft of claim 1, wherein the temperature detection device (210) is located internally to the gas turbine engine.

4. The aircraft of claim 1, wherein the temperature detection device (210) is mounted on a probe connecting into an engine casing of the gas turbine engine.

5. The aircraft of any preceding claim, wherein the at least one thermocouple is a plurality of thermocouples.

6. The aircraft of claim 5, wherein the plurality of thermocouples comprise a first thermocouple configured to detect a first reading of the delivery temperature and a second thermocouple configured to detect a second reading of the delivery temperature for redundancy, and
wherein the temperature detection device (210;310) is configured to communicate the first reading via a first channel to the control system (220) and communicate the second reading via a second channel of the control system (220).

7. The aircraft of any preceding claim, wherein the system comprises a line replaceable unit comprising the temperature detection device (210;310), wherein the line replaceable unit comprises the at least one thermocouple.

8. The aircraft of any preceding claim, wherein: the control system (220) comprises an electronic engine controller, and the temperature detection device (210;310) communicates the delivery temperature as an electrical signal to the electronic engine controller; and optionally,
wherein the communication of the delivery temperature to the control system (220) causes the control system to compare to the delivery temperature to an engine reference parameter; and optionally
wherein the control system (220) is configured to set a maintenance flag, a power reduction, or an in-flight shutdown flag based on the comparison of the delivery temperature to the engine reference parameter.

9. The aircraft of any preceding claim, the gas turbine engine (20), further comprising: a combustor section (26).

10. The aircraft of claim 9, where the temperature detection device (210;310) is a line replaceable unit.

11. The aircraft of claim 9 or 10, wherein the at least one thermocouple is a plurality of thermocouples,
wherein the plurality of thermocouples comprise a first thermocouple configured to detect a first reading of the delivery temperature and a second thermocouple configured to detect a second reading of the delivery temperature, and
wherein the temperature detection device (210;310) is configured to communicate the first reading via a first channel to the control system (220) and communicate the second reading via a second channel of the control system (220).

12. The aircraft of claim 9, 10 or 11, wherein the temperature detection device (210) is located in a mixing chamber (230) of the gas turbine engine (20), or wherein the temperature detection device (310) is located within an engine casing (409) substantially at a re-entry point (410A) of cooled-cooling air into the engine casing (409).

13. A method of detecting a delivery temperature of cooled air within an aircraft, the aircraft comprising a gas turbine engine (20), a cooling network coupled to the gas turbine engine (20), and an operational temperature detection system (200) comprising a temperature detection device (210;310) and a control system (220), the method comprising:
detecting, by a first thermocouple of the temperature detection device (210;310), a first reading of the delivery temperature at a first location (410A;410B),
wherein the first location is downstream a cooling network coupled to a gas turbine engine (20) and is upstream of at least one of a compressor rotor of a compressor section (24) of the gas turbine engine and a turbine rotor of a turbine section (28) of the gas turbine engine;
detecting, by a second thermocouple of the temperature detection device, a second reading of the delivery temperature at the first location (41 0A;41 0B); and
communicating, by the temperature detection device (210;310), the first reading via a first channel to the control system (220) of the operational temperature detection system (200) and the second reading via a second channel to the control system (220),
wherein the communication of the first and second readings of the delivery temperature to the control system (220) causes the control system to compare to the delivery temperature to an engine reference parameter.

14. The method of claim 13, where the temperature detection device (210;310) is a line replaceable unit.

15. The method of claim 13 or 14, wherein the temperature detection device (210) is located in a mixing chamber (230) of the gas turbine engine (20), or
wherein the temperature detection device (310) is located within an engine casing (409) substantially at a re-entry point (410A) of cooled-cooling air into the engine casing (409).

## Patentansprüche

1. Luftfahrzeug, umfassend:
ein Gasturbinentriebwerk (20), das einen Verdichterabschnitt (24) und einen Turbinenabschnitt (28) umfasst;
ein Kühlnetzwerk, das an das Gasturbinentriebwerk (20) gekoppelt ist; und
ein Betriebstemperaturerfassungssystem (200), das ein Steuersystem (220) und eine Temperaturerfassungsvorrichtung (210; 310) umfasst, das sich stromabwärts des Kühlnetzwerks befindet und sich stromaufwärts von zumindest einem von einem Verdichterrotor des Verdichterabschnittes (24) des Gasturbinentriebwerks und einem Turbinenrotor des Turbinenabschnittes (28) des Gasturbinentriebwerks befindet;
wobei die Temperaturerfassungsvorrichtung (210; 310) zumindest ein Thermoelement umfasst, das konfiguriert ist, um eine Liefertemperatur von gekühlter Kühlluft des Kühlnetzwerks, das an das Gasturbinentriebwerk gekoppelt ist, zu erfassen; und
wobei die Temperaturerfassungsvorrichtung konfiguriert ist, um dem Steuersystem (220) die Liefertemperatur zu kommunizieren.

2. Luftfahrzeug nach Anspruch 1, wobei sich die Temperaturerfassungsvorrichtung (210) in einer Mischkammer (230; 430) des Gasturbinentriebwerks befindet oder wobei sich die Temperaturerfassungsvorrichtung (310) innerhalb eines Triebwerksgehäuses (409) im Wesentlichen an einem Neueintrittspunkt (410A) von gekühlter Kühlluft in das Triebwerksgehäuse (409) befindet.

3. Luftfahrzeug nach Anspruch 1, wobei sich die Temperaturerfassungsvorrichtung (210) innerhalb des Gasturbinentriebwerks befindet.

4. Luftfahrzeug nach Anspruch 1, wobei die Temperaturerfassungsvorrichtung (210) an einer Sonde montiert ist, die sich in ein Triebwerksgehäuse des Gasturbinentriebwerks verbindet.

5. Luftfahrzeug nach einem vorhergehenden Anspruch, wobei das zumindest eine Thermoelement eine Vielzahl von Thermoelementen ist.

6. Luftfahrzeug nach Anspruch 5, wobei die Vielzahl von Thermoelementen ein erstes Thermoelement, das konfiguriert ist, um eine erste Ablesung der Liefertemperatur zu erfassen, und ein zweites Thermoelement umfasst, das konfiguriert ist, um eine zweite Ablesung der Liefertemperatur zur Redundanz zu erfassen, und
wobei die Temperaturerfassungsvorrichtung (210; 310) konfiguriert ist, um die erste Ablesung über einen ersten Kanal an das Steuersystem (220) zu kommunizieren und die zweite Ablesung über einen zweiten Kanal an das Steuersystem (220) zu kommunizieren.

7. Luftfahrzeug nach einem vorhergehenden Anspruch, wobei das System eine Leitungsauswechseleinheit umfasst, die die Temperaturerfassungsvorrichtung (210; 310) umfasst, wobei die Leitungsauswechseleinheit das zumindest eine Thermoelement umfasst.

8. Luftfahrzeug nach einem vorhergehenden Anspruch, wobei: das Steuersystem (220) eine elektronische Triebwerkssteuerung umfasst und die Temperaturerfassungsvorrichtung (210; 310) die Liefertemperatur als ein elektrisches Signal an die elektronische Triebwerkssteuerung kommuniziert; und optional
wobei die Kommunikation der Liefertemperatur an das Steuersystem (220) bewirkt, dass das Steuersystem die Liefertemperatur mit einem Triebwerksreferenzparameter vergleicht; und optional
wobei das Steuersystem (220) konfiguriert ist, um eine Wartungsmarkierung, eine Leistungsreduzierung oder eine Shutdown-Markierung im Flug basierend auf dem Vergleich der Liefertemperatur mit dem Triebwerksreferenzparameter zu setzen.

9. Luftfahrzeug nach einem vorhergehenden Anspruch, wobei das Gasturbinentriebwerk (20) ferner Folgendes umfasst:
einen Brennkammerabschnitt (26).

10. Luftfahrzeug nach Anspruch 9, wobei die Temperaturerfassungsvorrichtung (210; 310) eine Leitungsauswechseleinheit ist.

11. Luftfahrzeug nach Anspruch 9 oder 10, wobei das zumindest eine Thermoelement eine Vielzahl von Thermoelementen ist,
wobei die Vielzahl von Thermoelementen ein erstes Thermoelement, das konfiguriert ist, um eine erste Ablesung der Liefertemperatur zu erfassen, und ein zweites Thermoelement umfasst, das konfiguriert ist, um eine zweite Ablesung der Liefertemperatur zu erfassen, und
wobei die Temperaturerfassungsvorrichtung (210; 310) konfiguriert ist, um die erste Ablesung über einen ersten Kanal an das Steuersystem (220) zu kommunizieren und die zweite Ablesung über einen zweiten Kanal des Steuersystems (220) zu kommunizieren.

12. Luftfahrzeug nach Anspruch 9, 10 oder 11, wobei sich die Temperaturerfassungsvorrichtung (210) in einer Mischkammer (230) des Gasturbinentriebwerks (20) befindet oder wobei sich die Temperaturerfassungsvorrichtung (310) innerhalb eines Triebwerksgehäuses (409) im Wesentlichen an einem Neueintrittspunkt (410A) von gekühlter Kühlluft in das Triebwerksgehäuse (409) befindet.

13. Verfahren zum Erfassen einer Liefertemperatur von gekühlter Luft innerhalb eines Luftfahrzeugs, wobei das Luftfahrzeug ein Gasturbinentriebwerk (20), ein Kühlnetzwerk, das an das Gasturbinentriebwerk (20) gekoppelt ist, und ein Betriebstemperaturerfassungssystem (200) umfasst, das eine Temperaturerfassungsvorrichtung (210; 310) und ein Steuersystem (220) umfasst, wobei das Verfahren Folgendes umfasst:
Erfassen, durch ein erstes Thermoelement der Temperaturerfassungsvorrichtung (210; 310), einer ersten Ablesung der Liefertemperatur an einer ersten Stelle (410A; 410B),
wobei sich die erste Stelle stromabwärts eines Kühlnetzwerks befindet, das an ein Gasturbinentriebwerk (20) gekoppelt ist, und sich stromaufwärts von zumindest einem von einem Verdichterrotor eines Verdichterabschnittes (24) des Gasturbinentriebwerks und einem Turbinenrotor eines Turbinenabschnittes (28) des Gasturbinentriebwerks befindet;
Erfassen, durch ein zweites Thermoelement der Temperaturerfassungsvorrichtung, einer zweiten Ablesung der Liefertemperatur an der ersten Stelle (410A; 410B); und
Kommunizieren, durch die Temperaturerfassungsvorrichtung (210; 310), der ersten Ablesung über einen ersten Kanal an das Steuersystem (220) des Betriebstemperaturerfassungssystems (200) und einer zweiten Ablesung über einen zweiten Kanal an das Steuersystem (220),
wobei die Kommunikation der ersten und der zweiten Ablesung der Liefertemperatur an das Steuersystem (220) bewirkt, dass das Steuersystem die Liefertemperatur mit einem Triebwerksreferenzparameter vergleicht.

14. Verfahren nach Anspruch 13, wobei die Temperaturerfassungsvorrichtung (210; 310) eine Leitungsauswechseleinheit ist.

15. Verfahren nach Anspruch 13 oder 14, wobei sich die Temperaturerfassungsvorrichtung (210) in einer Mischkammer (230) des Gasturbinentriebwerks (20) befindet, oder
wobei sich die Temperaturerfassungsvorrichtung (310) innerhalb eines Triebwerksgehäuses (409) im Wesentlichen an einem Neueintrittspunkt (410A) von gekühlter Kühlluft in das Triebwerksgehäuse (409) befindet.

## Revendications

1. Aéronef, comprenant :
un moteur à turbine à gaz (20) comprenant une section de compresseur (24) et une section de turbine (28) ;
un réseau de refroidissement couplé au moteur à turbine à gaz (20) ; et
un système opérationnel de détection de température (200) comprenant un système de régulation (220) et un dispositif de détection de température (210 ; 310) situé en aval du réseau de refroidissement et situé en amont d'au moins l'un d'un rotor de compresseur de la
section de compresseur (24) du moteur à turbine à gaz et d'un rotor de turbine de la section de turbine (28) du moteur à turbine à gaz ;
dans lequel le dispositif de détection de température (210 ; 310) comprend au moins un thermocouple conçu pour détecter une température de refoulement d'air de refroidissement refroidi du réseau de refroidissement couplé au moteur à turbine à gaz ; et
dans lequel le dispositif de détection de température est conçu pour communiquer la température de refoulement au système de régulation (220).

2. Aéronef selon la revendication 1, dans lequel le dispositif de détection de température (210) est situé dans une chambre de mélange (230 ; 430) du moteur à turbine à gaz, ou dans lequel le dispositif de détection de température (310) est situé à l'intérieur d'un carter de moteur (409) sensiblement à un point de retour (410A) d'air de refroidissement refroidi dans le carter de moteur (409).

3. Aéronef selon la revendication 1, dans lequel le dispositif de détection de température (210) est situé à l'intérieur du moteur à turbine à gaz.

4. Aéronef selon la revendication 1, dans lequel le dispositif de détection de température (210) est monté sur une sonde reliée directement à l'intérieur d'un carter de moteur du moteur à turbine à gaz.

5. Aéronef selon une quelconque revendication précédente, dans lequel l'au moins un thermocouple est une pluralité de thermocouples.

6. Aéronef selon la revendication 5, dans lequel la pluralité de thermocouples comprend un premier thermocouple conçu pour détecter un premier relevé de la température de refoulement et un second thermocouple conçu pour détecter un second relevé de la température de refoulement à des fins de redondance, et
dans lequel le dispositif de détection de température (210 ; 310) est conçu pour
communiquer le premier relevé via un premier canal au système de régulation (220) et communiquer le second relevé via un second canal au système de régulation (220).

7. Aéronef selon une quelconque revendication précédente, dans lequel le système comprend une unité interchangeable de ligne comprenant le dispositif de détection de température (210 ; 310), dans lequel
l'unité interchangeable de ligne comprend l'au moins un thermocouple.

8. Aéronef selon une quelconque revendication précédente, dans lequel : le système de régulation (220) comprend un régulateur électronique moteur, et le dispositif de détection de température (210 ; 310) communique la température de refoulement en tant que signal électrique au régulateur électronique moteur ; et éventuellement,
dans lequel la communication de la température de refoulement au système de régulation (220) amène le système de régulation à comparer la température de refoulement à un paramètre de référence de moteur ; et éventuellement
dans lequel le système de régulation (220) est conçu pour définir un indicateur de maintenance, une réduction de puissance ou un indicateur d'extinction de moteur en vol sur la base de la comparaison de la température de refoulement avec le paramètre de référence de moteur.

9. Aéronef selon une quelconque revendication précédente, le moteur à turbine à gaz (20) comprenant en outre :
une section de chambre de combustion (26).

10. Aéronef selon la revendication 9, dans lequel le dispositif de détection de température (210 ; 310) est une unité interchangeable de ligne.

11. Aéronef selon la revendication 9 ou 10, dans lequel l'au moins un thermocouple est une pluralité de thermocouples,
dans lequel la pluralité de thermocouples comprend un premier thermocouple conçu pour détecter un premier relevé de la température de refoulement et un second thermocouple conçu pour détecter un seconde relevé de la température de refoulement, et
dans lequel le dispositif de détection de température (210 ; 310) est conçu pour communiquer le premier relevé via un premier canal au système de régulation (220) et communiquer le second relevé via un second canal au système de régulation (220).

12. Aéronef selon la revendication 9, 10 ou 11, dans lequel le dispositif de détection de température (210) est situé dans une chambre de mélange (230) du moteur à turbine à gaz (20), ou dans lequel le dispositif de détection de température (310) est situé dans un carter de moteur (409) sensiblement à un point de retour (410A) d'air de refroidissement refroidi dans le carter de moteur (409) .

13. Procédé de détection d'une température de refoulement d'air refroidi à l'intérieur d'un aéronef, l'aéronef comprenant un moteur à turbine à gaz (20), un réseau de refroidissement couplé au moteur à turbine à gaz (20), et un système opérationnel de détection de température (200) comprenant un dispositif de détection de température (210 ; 310) et système de régulation (220), le procédé comprenant :
la détection, par un premier thermocouple du dispositif de détection de température (210 ; 310), d'un premier relevé de la température de refoulement à un premier emplacement (410A ; 410B),
dans lequel le premier emplacement est en aval d'un réseau de refroidissement couplé à un moteur à turbine à gaz (20) et est en amont d'au moins l'un d'un rotor de compresseur d'une section de compresseur (24) du moteur à turbine à gaz et d'un rotor de turbine d'une section de turbine (28) du moteur à turbine à gaz ;
la détection, par un second thermocouple du dispositif de détection de température, d'un second relevé de la température de refoulement au premier emplacement (410A ; 410B) ; et
la communication, par le dispositif de détection de température (210 ; 310), du premier relevé via un premier canal au système de régulation (220) du système opérationnel de détection de température (200) et du second relevé via un second canal au système de régulation (220),
dans lequel la communication des premier et second relevés de la température de refoulement au système de régulation (220) amène le système de régulation à comparer la température de refoulement à un paramètre de référence de moteur.

14. Procédé selon la revendication 13, dans lequel le dispositif de détection de température (210 ; 310) est une unité interchangeable de ligne.

15. Procédé selon la revendication 13 ou 14, dans lequel le dispositif de détection de température (210) est situé dans une chambre de mélange (230) du moteur à turbine à gaz (20), ou
dans lequel le dispositif de détection de température (310) est situé à l'intérieur d'un carter de moteur (409) sensiblement à un point de retour (410A) d'air de refroidissement refroidi dans le carter de moteur (409).
